(19) Europäisches Patentamt
European Patent Office
Office européen des brevets

(11) **EP 1 447 536 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
*F01N 3/28* (2006.01)          *F01N 3/08* (2006.01)
*B01D 53/94* (2006.01)

(21) Anmeldenummer: **04002437.4**

(22) Anmeldetag: **04.02.2004**

(54) **Verfahren zur Auslegung eines Katalysatorsystems**

Method for designing a catalyst system

Procédé de disposition d'un système catalytique

(84) Benannte Vertragsstaaten:
**AT BE BG CH CY CZ DE DK EE ES FI FR GB GR HU IE IT LI LU MC NL PT RO SE SI SK TR**

(30) Priorität: **05.02.2003 DE 10304591**
              **24.02.2003 DE 10307724**

(43) Veröffentlichungstag der Anmeldung:
**18.08.2004 Patentblatt 2004/34**

(73) Patentinhaber: **Volkswagen AG**
**38436 Wolfsburg (DE)**

(72) Erfinder:
• **Pott, Ekkehard, Dr.**
**38518 Gifhorn (DE)**

• **Donnerstag, Achim**
**38102 Braunschweig (DE)**

(74) Vertreter: **Pohlmann, Bernd Michael**
**Reinhardt & Pohlmann Partnerschaft**
**Günthersburgallee 40**
**60316 Frankfurt am Main (DE)**

(56) Entgegenhaltungen:
**EP-A- 0 908 225          EP-A- 1 123 729**
**DE-A- 19 921 971          US-A- 6 164 063**
**US-A1- 2002 050 135          US-A1- 2002 061 268**

**Beschreibung**

Die Erfindung betrifft ein Kraftfahrzeug gemäß des Oberbegriffs des unabhängigen Anspruchs.

Während in der Vergangenheit für Kraftfahrzeuge meist bei einem stöchiometrischen Luftverhältnis arbeitende Otto-Motoren verwendet wurden, werden gegenwärtig immer häufiger zur wirksamen Senkung des Kraftstoffverbrauchs magerlauffähige Verbrennungsmotoren, insbesondere DI-Ottomotoren, eingesetzt. Dem Vorteil eines geringeren Kraftstoffverbrauchs stehen bei diesen die aufgrund des Sauerstoffüberschusses bei einem mageren Abgas auftretenden höheren Stickoxid (NOx-Emissionen) gegenüber, die mit konventionellen Abgasreinigungsmaßnahmen, wie beispielsweise einem Dreiwegekatalysator, nicht in akzeptablem Ausmaß reduziert werden können. Daher erfordern diese sogenannten Magerkonzepte (DI-Ottomotor, DI-Selbstzünder) einen erhöhten Aufwand bei der Abgasreinigung, um den heutigen und zukünftigen Emissionsvorschriften entsprechen zu können.

Zur Abgasreinigung für die angesprochenen magerlauffähigen Verbrennungsmotoren sind Katalysatorsysteme mit Kombinationen aus motornahen Vorkatalysatoren und stromab dieser angeordneten Hauptkatalysatoren bekannt. Ein derartiger Hauptkatalysator ist üblicherweise als NOx-Speicherkatalysator (NOx-Katalysator) ausgebildet. Ein NOx-Speicherkatalysator besitzt dabei gegenüber einem konventionellen Dreiwegekatalysator die zusätzliche Fähigkeit, NOx eines mageren Abgases zu speichern. Demgegenüber besteht die Aufgabe eines Vorkatalysators darin, die in Warmlaufphasen auftretenden Emissionen von Schadstoffen zu konvertieren und darüber hinaus einen großen Anteil der Schadstoffkonvertierung bei einem Betrieb des Verbrennungsmotors mit stöchiometrischem Gemisch zu sichern.

Ein NOx-Speicherkatalysator weist gegenüber einem Dreiwegekatalysator zusätzliche Speicherkomponenten für Stickoxide auf. Auf einem Träger, meist aus dem keramischen Material Cordierit oder gewickelten Metallfolien, befindet sich ein Washcoat, hauptsächlich aus Aluminiumoxid und Ceroxid. Der Washcoat dient als Träger für Edelmetallkatalysatoren, vorzugsweise Platin, Palladium, und / oder Rhodium. Zur NOx-Speicherung sind Materialien aus der Gruppe der schweren Alkalimetalle, der schweren Erdalkalimetalle oder der leichten seltenen Erden in Form von Oxid oder Carbonat auf dem Washcoat aufgebracht. Um eine möglichst große geometrische Oberfläche zur Verfügung zu stellen, ist der keramische oder metallische Träger durch wabenförmige Zellen gebildet. Eine hohe NOx-Konversionsrate wird von derartigen NOx-Speicherkatalysatoren nur innerhalb eines NOx-Arbeitstemperaturfensters erreicht.

Bei der Auslegung der NOx-Speicherkatalysatoren sind mehrere Faktoren zu beachten. Neben der Höhe der NOx-Rohemission des Verbrennungsmotors, insbesondere bei Magerbetrieb, sind dies vor allem Fahrzeuggewicht, Motorhubraum, eine geforderte Abgasreinigungswirkung, der Magerbetriebsanteil im Typzulassungstest und im Kundenverkehr.

Die geforderte Abgasreinigungswirkung wird durch gesetzliche Vorschriften zur Abgasemission vorgegeben, wobei die Höhe der Grenzwerte während sogenannter Fahrzyklen vorgeschrieben ist. In den EU-Ländern wird gemäß der EU Richtlinie 91/441/EWG von dem Neuen Europäischen Fahrzyklus NEFZ ein Geschwindigkeitsprofil vorgegeben, das einem typischen Stadt- und Überlandverkehraufkommen entsprechen soll. Ein Test entsprechend dem NEFZ hat eine Gesamtdauer von 1180 S, wobei die zurückgelegte Fahrstrecke 11,007 km beträgt. Die gemessenen kumulierten Emissionen während des Fahrzyklus werden auf die Fahrstrecke bezogen.

Die Grenzwerte gemäß der Emissionsstufe EU 3 und EU 4 sind im folgenden dargestellt:

|  | NOx[g/km] | |
| --- | --- | --- |
|  | Otto | Diesel |
| EU 3 | 0.15 | 0.5 |
| EU 4 | 0.08 | 0.25 |

Ein wesentlicher Faktor, der die Konversionseffizienz eines NOx-Speicherkatalysators bestimmt, ist dessen Volumen KATVOL. Definiert man ein spezifisches NOx-Speicherkatalysatorvolumen,

$$SKVOL = {}^{KATVOL} / {}_{VH \cdot MLEER}$$

und einen spezifischen Motorhubraum

$$SVH = {}^{VH} / {}_{MLEER}$$

mit KATVOL = NOx-Speicherkatalysatorvolumen in Litern, VH = Motorhubraum in Litern und MLEER = Fahrzeugleergewicht in Tonnen bei der Fahrzeug-Typzulassung, so ergeben sich Kenngrößen, mit denen sich die Katalysatorauslegung eines Kraftfahrzeugs charakterisieren lässt. Als Katalysatorvolumen wird hierbei das vom Katalysatorgehäuse umschlossene Volumen bezeichnet. Das Leergewicht ist das Gewicht des betriebsfertigen Fahrzeugs mit gefülltem Kraftstoffbehälter und Ersatzrad in serienmäßiger Grundausstattung. Für bisher am Markt befindliche Fahrzeuge mit DI-Ottomotoren ergeben sich folgende Werte:

| Modell | KATVOL [l] | VH [l] | MLEER [t] | SVH | SKVOL | Abgasstufe |
|---|---|---|---|---|---|---|
| VW Lupo | 1,7 | 1,4 | 1,000 | 1,40 | 1,21 | EU 4 |
| Citroen Xantia | 2,9 | 2,0 | 1,400 | 1,43 | 1,04 | EU 3 |
| VW Golf | 1,7 | 1,6 | 1,300 | 1,23 | 0,82 | EU 4 |
| Toyota Corona | 1,5 | 2,0 | 1,400 | 1,43 | 0,54 | Japan 10-15 |
| Nissan Bluebird | 1,7 | 1,8 | 1,400 | 1,29 | 0,67 | Japan 10-15 |

Die Modelle VW Lupo, Citroen Xantia und VW Golf erfüllen dabei die Anforderungen der europäischen Emissionsstufe EU 3 bzw. EU 4. Sofern im europäischen Fahrzyklus NEFZ spätestens ab Sekunde 250 die Leerlauf- und Konstantfahrphasen bei Fahrgeschwindigkeiten < 100 km/h im geschichteten Magerbetrieb oder homogenen Magerbetrieb mit Lambda > 1,2 zurückgelegt werden sollen, ist zu erkennen, dass ein SKVOL > 0,8 erforderlich ist. Ferner ist zu erkennen, dass die gegenwärtig im Markt befindlichen Fahrzeuge große spezifische Hubräume mit SVH > 1,2 aufweisen. Andererseits ist zu erkennen, dass Fahrzeuge, die dem weniger anspruchsvollen japanischen Testzyklus Japan 10-15 genügen, mit kleineren Katalysatoren mit SKVOL ≤ 0,67 ausgestattet sind.

Bei kleineren spezifischen Hubräumen SVH < 1,2 ist mit einer höheren mittleren Last des Motors zu rechnen. Damit sind im Magerbetrieb höhere NOx-Rohemissionen zu erwarten, so dass der Bedarf an einer hocheffizienten NOx-Konversion durch den NOx-Speicherkatalysator zunimmt. Um ein spezifisches Katalysatorvolumen SKVOL von mindestens 0,8 für ein Fahrzeug mit einem Leergewicht von 1500 kg und einem Hubraum von 1,6 l zu erhalten, ist gemäß der üblichen Auslegung mindestens ein Katalysatorvolumen von 1,92 l erforderlich, sofern die europäischen Abgasgrenzwerte EU 3 eingehalten werden sollen.

Mit einer Auslegung gemäß dem Stand der Technik wäre eine deutliche Kostensteigerung durch ein erhöhten Materialaufwand für Katalysatorträger und Edelmetallbeladung des Katalysators verbunden. Als weitere Folge wäre ein Emissions- und Verbrauchsanstieg nicht auszuschließen, da ein größerer Katalysator eine größere thermische Trägheit aufweist und mehr Energie zum Erreichen der Drei-Wege-Lightoff-Temperatur benötigt. Dies wiederum hätte zur Folge, dass in der ersten homogenen Fahrphase nach einem Kaltstart mehr Kohlenwasserstoff (HC), Kohlenmonoxid (CO) und NOx emittiert wird. Die höhere thermische Trägheit verzögert auch das Erreichen der Katalysator-Mindesttemperatur, bei der ein Magerbetrieb des Verbrennungsmotors freigegeben werden kann. Darüber hinaus wird durch einen größeren Katalysator die Auskühlung des NOx-Speicherkatalysators in das NOx-Arbeitstemperaturfenster nach einem Hochlastbetrieb verzögert und damit ein Magerbetrieb erneut eingeschränkt. Analog muss ein Entschwefelungsprozess gegebenenfalls für längere Zeit und mit mehr Heizaufwand durchgeführt werden.

Bereits bekannt ist aus der DE 199 21 263 A1 eine Brennkraftmaschine mit nachgeschaltetem Katalysator, der so ausgelegt ist, dass er eine gesetzlich geforderte hohe Effektivität erreicht, aber ein signifikant kleineres Volumen als der Hubraum des Verbrennungsmotors aufweist. Der Katalysator hat dabei einen Wabenkörper mit einem Volumen, welches mindestens um den Faktor 0,6 kleiner ist als der Hubraum der Brennkraftmaschine, wobei die geometrische Oberfläche so bemessen ist, dass der Katalysator eine Effektivität von mehr als 98% hat. Der Wabenkörper besitzt für Abgas durchströmbare Kanäle, wobei die Anzahl der Kanäle im Querschnitt des Wabenkörpers mindestens 500 cpsi (cells per square inch) beträgt. Die durchschnittliche Dicke der die Kanäle voneinander trennenden Kanalwände beträgt dabei bei Verwendung von Metallfolien höchstens 40 $\mu$m und liegt vorzugsweise zwischen 18 $\mu$m und 32 $\mu$m.

Der Wabenkörper kann auch eine Anzahl von Kanälen von mehr als 750 cpsi und ein Volumen von weniger als dem 0,5-fachen des Hubraums der Brennkraftmaschine aufweisen.

Katalysatoren mit mehr als 600 cpsi und unterschiedlichen Wandstärken von 1 mil (1 mil = 0,0254 mm) sind im Stand der Technik bereits seit einiger Zeit bekannt. So sind in der DE 199 57 311 A1 ein Katalysator mit wenigstens 800 cpsi und einer Wandstärke von 1 mil, in der DE 199 21 263 A1 ein Katalysator mit 600 cpsi - 800 cpsi bei Wandstärken von ca. 1,2 mil aus den DE 43 411 60 A1, der DE 42 154 81 A1 ein Katalysator mit 1200 cpsi und Wandstärken von ca. 4 mil, der DE 43 411 59 A1 ein Katalysator mit 1000 cpsi und Wandstärken von kleiner als 1 mm beschrieben. Ferner offenbaren die WO 02/23020 A1 sowie die DE 100 45 502 A1 einen Katalysator mit 800 cpsi und Wandstärken unter 1 mil.

Zu vermerken ist, dass bei der aus der DE 199 21 263 A1 bekannten Brennkraftmaschine kein NOx-Speicherkatalysator vorgesehen ist und lediglich vorgeschlagen wird, einen geringen Wert des Volumens der Wabenkörper relativ zum Hubraum der Brennkraftmaschine zu wählen und dessen negativen Effekt auf die Reinigungseffektivität des Katalysators durch eine Bemessung der geometrischen Oberfläche des Katalysators auszugleichen.

Bei Fahrzeugen mit 3-Wege- Katalysatorsystemen können aufgrund der höheren durchschnittlichen Abgastemperatur vor dem Katalysatorsystem und der resultierenden vermiedenen Auskühlung bis in den Lightoff-Temperaturbereich geringere Katalysatorvolumina als bei Katalysatorsystemen für Magerbetrieb vorgesehen werden

Aus der US 2002/050135 A1 ist ferner eine Abgasreinigungsvorrichtung in Verbindung mit einem Verbrennungsmotor bekannt, wobei ein NOx-Speicherkatalysator ein Volumen von 1,7 Litern und der Verbrennungsmotor ein Hubraum von 1,8 Litern aufweist.

Trotz der im Stand der Technik vorhandenen Bandbreite von Katalysatoren mit hoher Zelldichte wurde bisher angenommen, dass für magerlauffähige Motoren zum Erreichen der Europäischen Abgasgrenzwerte EU III und schärfer bei Verwendung von NOx-Speicherkatalysatorsystemen ein SKVOL von mindesten 0,8 erforderlich ist.

Aufgabe der vorliegenden Erfindung ist die Auslegung eines Kraftfahrzeugs, das mit einem magerlauffähigen Verbrennungsmotor mit einem oder mehreren NOx-Speicherkatalysatoren mit einem geringen spezifischen Katalysator-Gesamtvolumen ausgerüstet ist und das dennoch strenge gesetzliche Abgasvorschriften erfüllen kann.

Diese Aufgabe wird erfindungsgemäß durch die Merkmale des unabhängigen Anspruchs gelöst.

Ein mit dem erfindungsgemäßen Verfahren ausgelegtes Kraftfahrzeug ist mit einem oder mehreren NOx-Speicherkatalysatoren mit einem spezifischen Katalysator-Volumen SKVOL < 0,8 versehen, wobei das Kraftfahrzeug im Neuen Europäischen Fahrzyklus NEFZ für zumindest 250 Sekunden bei einem Abgaslambda von > 1,1 betreibbar ist. Bei einer weiteren Ausführungsform genügt SKVOL der Bedingung SKVOL ≤ 1 - 1,25 (SVH-1), wobei SVH den spezifischen Hubraum des Fahrzeugs bezeichnet. Mit einem derartigen Fahrzeug können deutliche Kostenverminderungen, aufgrund des kleinen spezifischen Katalysatorvolumens, erreicht werden. Ferner weist erfindungsgemäß der NOx-Speicherkatalysator eine geringere thermische Trägheit auf, was sich günstig auf das Verbrauchs- und Emissionsverhalten des Kraftfahrzeugs auswirkt.

Weiterhin ist zur Reduzierung einer aufgrund eines höheren Fahrzeuggewichts erhöhten Emission von NOx, HC und/oder weiteren Schadstoffen im Abgas bei einem spezifischen Katalysatorvolumen SKVOL < 0,8 der Wert der geometrischen Oberfläche GSA des oder der NOx-Speicherkatalysatoren erhöht. Vorzugsweise wird dieser Wert so gewählt, dass das Fahrzeug im NEFZ die Erfüllung der Emissionsstufe EU3 oder EU4 erlaubt. Ferner ist es vorteilhaft, wenn das Fahrzeug dabei für zumindest 250 Sekunden mit einem Abgaslambdawert > 1,1 betreibbar ist.

Bei einer bevorzugten Ausführungsform der Erfindung ist ein NOx-Speicherkatalysator mit Zellen mit einer Zelldichte von 800 cpsi oder mehr, insbesondere 900 cpsi, vorgesehen.

Wenn die Zellen eines keramischen Katalysatorträgers Zellwände mit einer Randstärke von höchsten 3,5 mil, vorzugsweise 3,0 mil, besonders bevorzugt 2,5 mil, aufweisen, kann damit auch bei einer hohen Zelldichte ein geringer Abgasgegendruck erreicht werden.

Wenn ausgehend von einem vorgegebenen SKVOL = 0,8 bei einer Reduzierung dieses Werts die geometrische Oberfläche GSA gemäß folgender Vorschrift erhöht wird

| SKVOL-Änderung | GSA-Änderung |
|---|---|
| -5% | +1,25% / +1,67% / +2,5% |
| -10% | +2,5% /+3.33% / +5% |
| -15% | +3,75% / +5% / +7,5% |

kann trotz reduziertem spezifischen Katalysatorvolumen durch die korrespondierende Änderung der geometrischen Oberfläche des NOx-Speicherkatalysators eine Erfüllung der europäischen Abgasnormen realisiert werden.

Hierbei wird von einem in üblicherweise Weise aufgebauten NOx-Speicherkatalysator mit einem wabenförmigen Träger mit einer als Washcoat ausgebildeten Oberfläche ausgegangen. Als geometrische Oberfläche wird hier die Oberfläche des wabenförmigen Trägers ohne den Washcoat bezeichnet. Bei mehreren NOx-Speicherkatalysatoren beziehen sich die Werte vom SKVOL sowie der geometrischen Oberfläche GSA auf die Gesamtheit die Speicherkatalysatoren.

Ein Kraftfahrzeug mit einem relativ niedrigen spezifischen Motorhubraum kann trotz eines relativ kleinen spezifischen Katalysatorvolumens strenge Abgasemissionsvorschriften erfüllen.

Weitere Ausführungsformen und Vorteile der Erfindung sind den abhängigen Ansprüchen, sowie unabhängig von ihrer Zusammenfassung in den Ansprüchen, der nachfolgenden Beschreibung und den Zeichnungen zu entnehmen.

Die Zeichnungen zeigen in

- Figur 1 einen Verbrennungsmotor mit einem Katalysatorsystem,
- Figur 2 eine schematische Darstellung der Beziehung zwischen dem spezifischen Hubraumvolumen und dem spezifischen Katalysatorvolumen für bereits am Markt befindliche Kraftfahrzeuge sowie für ein erfindungsgemäßes Kraftfahrzeug.

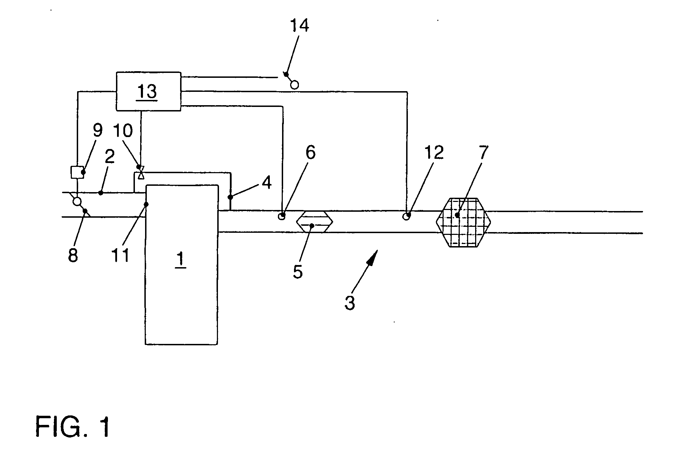

Der in Figur 1 dargestellte magerlauffähige Verbrennungsmotor 1 für ein Kraftfahrzeug ist vorzugsweise ein direkt einspritzender, insbesondere schichtladefähiger Ottomotor oder ein Dieselmotor. Der Verbrennungsmotor 1 hat einen Lufteinlasskanal 2 und eine Abgasanlage 3, von der eine Abgasrückführungsleitung 4 zu dem Lufteinlasskanal 2 führt. Mittels der Abgasrückführungsleitung 4 kann die NOx-Rohemission reduziert werden. Die Abgasanlage 3 umfasst eine Abgasreinigungsvorrichtung mit einer motornahen Vorkatalysatoreinrichtung 5 und stromab der Vorkatalysatoreinrichtung 5 einen NOx-Speicherkatalysator 7. Die Entnahme des rückgeführten Abgases kann abweichend von Fig. 1 auch hinter einer Vorkatalysatoreinrichtung 5 erfolgen. Im Lufteinlasskanal 2 ist stromauf der Einmündung der Abgasrückführungsleitung 4 eine Drosselklappe 8 angeordnet, die beispielsweise mittels eines Stellmotors 9 zu öffnen und zu schließen ist. Zur Kontrolle der von der Abgasanlage 3 zu dem Lufteinlass 11 zurückgeführten Abgasmenge ist ein Stellventil 10 in der Abgasrückführungsleitung 4 angeordnet. Stromauf der Katalysatoren 5, 7 ist eine Abgassonde 6 zur Ermittlung eines Abgas-Lambdawertes angeordnet.

Abweichend von der Fig. 1 kann die Abgasreinigungsvorrichtung auch mehrere NOx-Speicherkatalysatoren und/oder Vorkatalysatoren aufweisen.

Eine Lambdasonde 12 ist stromaufwärts des NOx-Speicherkatalysators 7 in der Abgasanlage angeordnet, mit der an dieser Position der Sauerstoffgehalt des Abgases ermittelt werden kann. Die Signale der Lambdasonde 12 werden einer Steuerung 13 zugeführt, die wiederum den Stellmotor 9 der Lufteinlassdrossel 8 und das Stellventil 10 ansteuert. Ferner erhält die Steuerung 13 weitere motorrelevante Werte, wie bspw. die Drehzahl N des Motors und sowie den Lastwert, bspw. von einem Gaspedal 14.

Der Verbrennungsmotor 1 wird in an sich bekannter Weise derart betrieben, dass das aus dem Vorkatalysator 5 und dem NOx-Speicherkatalysator 7 bestehende Katalysatorsystem eine den vorgeschriebenen Abgasgrenzwerten entsprechende Gesamtemission an Schadstoffen, insbesondere Kohlenwasserstoffen (HC), Kohlenmonoxid (CO) und Stickoxid (NOx) nicht überschreitet. Besonders bevorzugt ist ein Schichtladebetrieb mit einem mageren Gemisch. In Abhängigkeit von der NOx-Beladung des NOx-Speicherkatalysators 7 und unter Umständen noch weiteren Randbedingungen ist eine Regeneration des NOx-Speicherkatalysators mit einem stöchiometrischen bis fetten Gemisch erforderlich.

Vorzugsweise wird bei dem Betrieb des Verbrennungsmotors 1 ferner eine Temperatur zumindest von Teilen des NOx-Speicherkatalysators 7 in einem Arbeitsfenster zwischen 250 °C und 500 °C gewährleistet. In Abhängigkeit von einer mit an sich bekannten Mitteln diagnostizierbaren Schwefelvergiftung kann der NOx-Speicherkatalysator auch auf höhere Temperaturen zur Durchführung einer Desulfatierung aufgeheizt werden, wenn dies wegen einer durch schwefelhaltigen Kraftstoff verursachten Schwefelvergiftung des NOx-Speicherkatalysators 7 erforderlich sein sollte.

Die Vorkatalysatoreinrichtung 5 ist vorzugsweise zur Reinigung eines stöchiometrischen Abgases optimiert ausgelegt. In einer bevorzugten Ausführungsform ist die Vorkatalysatoreinrichtung 5 als Dreiwegekatalysator, d.h. als geregelter Katalysator ausgebildet um Kohlenwasserstoffe, Kohlenmonoxid und Stickoxid mit einer Abgaszusammensetzung im Bereich um Lambda = 1 zu konvertieren. Bevorzugt besteht diese Vorkatalysatoreinrichtung aus einem wabenförmigen Keramik- oder Metallträger, in dessen Kanälen eine Trägerschicht aus Aluminiumoxid aufgebracht ist, die die Oberfläche stark vergrößert. Auf diese Oberfläche ist das eigentliche Katalysatormaterial, vor allem Edelmetalle wie Platin, Palladium und Rhodium aufgebracht.

Der NOx-Speicherkatalysator 7 ist in an sich bekannter Weise aufgebaut und weist einen wabenförmigen Träger mit einer als Washcoat ausgebildeten Oberfläche auf. Vorzugsweise enthält der Washcoat $\gamma$-Aluminiumoxid. Als Speichermaterial für Stickoxide werden vorzugsweise basische Materialien wie Alkalimetalloxide oder Erdalkalimetalloxide verwendet.

Ferner enthält der NOx-Speicherkatalysator eine Edelmetallbeladung, vorzugsweise Platin, Palladium und/oder Rhodium. Zur Verbesserung des Speicher- und/oder des katalytischen Verhaltens des NOx-Speicherkatalysators kann dieser auch noch weitere Merkmale aufweisen, bspw. ein besonders poröses Trägermaterial, unter Umständen Abschnitte, die ein saures Material enthalten und auch mehrere Trägerschichten aufweisen. Der Träger, der auch aus Metallfolien bestehen kann, bildet wabenförmige Zellen, die durch Zellwände getrennt sind und durch die Abgas strömen kann.

Als Volumen des Katalysators wird im Folgenden die einhüllende Kontur des beschichteten Katalysatorträgers ohne umhüllende Halte- oder Verpackungsvorrichtungen bezeichnet. Beispielsweise ist daher bei einem zylinderförmigen Katalysator das Volumen n / 4 $\cdot$ d$^2$ $\cdot$ II, wobei d der Durchmesser und I die Länge des Katalysatorträgers ist.

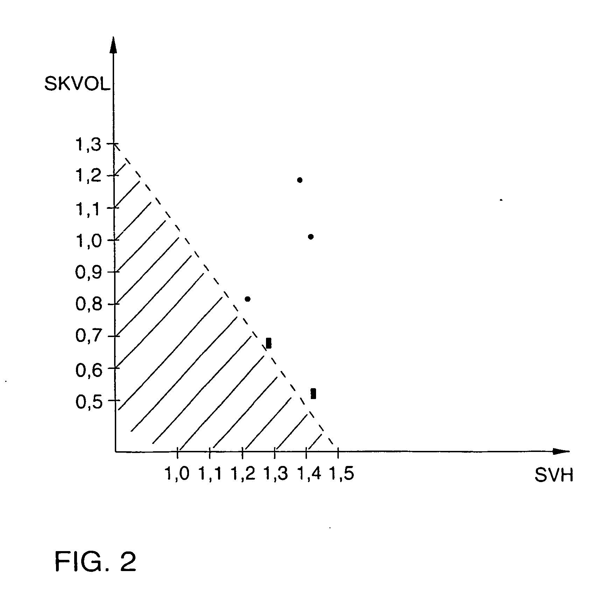

Die in Figur 2 dargestellten Kenngrößen, das spezifische NOx-Speicherkatalysatorvolumen SKVOL = $^{KATVOL}$/$_{VH \cdot MLEER}$ und der spezifische Motorhubraum SVH = $^{VH}$/$_{MLEER}$ erlauben es, die Katalysatorauslegung eines Kraftfahrzeugs zu charakterisieren. Hierbei bezeichnet KATVOL das Volumen eines NOx-Speicherkatalysators in Litern, VH den Motorhubraum in Litern und MLEER das Fahrzeugleergewicht in Tonnen bei der Fahrzeugtypzulassung. Das Leergewicht ist das Gewicht des betriebsfertigen Fahrzeugs mit gefülltem Kraftstoffbehälter und Ersatzrad in serienmäßiger Grundausstattung. Die dargestellten Werte beziehen sich auf Verbrennungsmotoren bzw. Kraftfahrzeuge mit derartigen Verbrennungsmotoren mit einem Katalysatorsystem, welches zumindest einen NOx-Speicherkatalysator, unter Umständen jedoch auch einen Vorkatalysator aufweisen. Der Verbrennungsmotor ist vorzugsweise ein DI-Ottomotor oder ein direkteinspritzender selbstzündender Motor. Jedes kreisförmige Element in Figur 2 bezeichnet eine Kombination eines SVH-Wertes mit einem SKVOL-Wert, wobei zu beachten ist, dass die zugehörigen Verbrennungsmotoren bzw. Fahrzeuge die europäische Emissionsstufe EU 3 bzw. EU 4 erfüllen. Die rechteckigen Symbole bezeichnen die Werte von Verbrennungsmotoren bzw. Kraftfahrzeugen mit einem relativ hohen spezifischen Motorhubraum SVH und niedrigen spezifischen Katalysatorvolumen SKVOL, die jedoch die Grenzwerte gemäß der europäischen Emissionsstufen nicht erfüllen, da das spezifische Katalysatorvolumen zu gering gewählt ist.

Der Bereich in Figur 2 unterhalb der Geraden mit einem Wert SKVOL = 1 - 1,25 (SVH-1) bezeichnet den Bereich der erfindungsgemäßen Auslegung des Verbrennungsmotors bzw. des Kraftfahrzeugs. In diesem Bereich wird vorzugsweise die geometrische Oberfläche des Katalysators so groß gewählt, dass eine NOx-Konversionsrate des NOx-Speicherkatalysators von mindestens 90% erreicht wird.

Ein mit dem erfindungsgemäßen Verfahren ausgelegtes Kraftfahrzeug kann im Neuen Europäischen Fahrzyklus NEFZ bei einem Abgaslambdawert in einem Bereich von vorzugsweise > 1,1 sowie vorzugsweise < 8 mit einem Magerbetriebsanteil von zumindest 250 Sekunden, vorzugsweise sogar 350 Sekunden betrieben werden. Dabei ist vorzugsweise für die Gesamtheit aller NOx-Speicherkatalysatoren des zugeordneten Abgasreinigungssystems das spezifische Katalysatorgesamtvolumen SKVOL < 0,8. Bevorzugt sind ferner Ausführungsformen bei denen das spezifische Katalysatorvolumen SKVOL < 0,75 bzw. < 0,7 oder < 0,6 ist. Es hat sich ferner gezeigt, dass es günstig ist ein spezifisches Katalysatorgesamtvolumen > 0,2, > 0,3 und idealerweise > 0,4 zu wählen. Weiterhin wird ein Wert von SKVOL < 0,8 bei Verbrennungsmotoren mit einem kleinen relativen Hubraum SVH < 1,2 gewählt, die aufgrund der höheren Leistungsforderung zu höheren NOx-Emissionen tendieren.

Zur Erhöhung der geometrischen Oberfläche GSA des Speicher-Katalysators wird bei gegebenem Katalysatorvolumen die Zelldichte, das heißt die Anzahl der Zellen pro Querschnittsfläche, erhöht. Allerdings führt eine erhöhte Zelldichte bei dem Betrieb des Katalysators zu einem erhöhten Abgasgegendruck und damit verbundenem erhöhten Energieverbrauch. Zur Absenkung des Abgasgegendrucks ist es daher zweckmäßig, die Wandstärke der Zellen zu verringern, womit auch die thermische Trägheit vermindert und somit eine weitere Reduzierung des Energieverbrauchs begünstigt wird. Erfindungsgemäß ist daher eine Zelldichte mit einem Wert von mindestens 900 cpsi (cells per square inch) vorgesehen. Besonders vorteilhaft ist ein solcher Wert der Zelldichte in Verbindung mit keramischen Zellwänden und einer Reduzierung der Zell-Wandstärke auf < 4 mil, besonders bevorzugt < 3 mil, optimal < 2,5 mil, wobei 1 mil = 0,0254 mm.

Im Folgenden wird eine erfindungsgemäße Auslegung des Verbrennungsmotors für einen 1,6 Liter DI-Ottomotor und ein Fahrzeug von 1250 kg Leergewicht beispielhaft beschrieben. Um die Emissionsstufe EU 4 zu erreichen, wird ein Keramik-Katalysator mit einem Volumen von 4,66" x 6" und 600 cpsi / 4 mil als NOx-Speicherkatalysator eingesetzt. Das spezifische Hubraumvolumen SVH hat einen Wert von 1,28. Bei dem Katalysatorvolumen von 1,68 l beträgt in diesem Fall der Wert SKVOL des spezifischen Katalysatorvolumens 0,84. Die geometrische Oberfläche des Katalysators beträgt 5,2 m$^2$.

Wird das Fahrzeugleergewicht um 18 % von einem Wert von 1250 kg auf 1480 kg erhöht, wird der spezifische Hubraum SVH auf einen Wert von 1,08 reduziert. Erfindungsgemäß wird der Wert des spezifischen Katalysatorvolumens SKVOL verringert. Bei einer beispielsweise aus Kostengründen beibehaltenen Katalysatorvolumen von 1,68 l sinkt der Wert von SKVOL auf 0,71, das heißt um 15 % gegenüber dem Wert des leichteren Grundfahrzeugs. Die Reduzierung des spezifischen Katalysatorvolumens wird erfindungsgemäß mit einer Erhöhung der geometrischen Oberfläche des Katalysators verbunden, so dass die Emissionsstufe EU 4 erreicht wird. Beispielsweise kann die geometrische Oberfläche um einen Wert von mindestens 7,5 % auf 5,59 m$^2$ angehoben werden. Erreicht werden kann dies beispielsweise, wenn die Zellstruktur des Katalysators von 600 cpsi / 4 mil auf 900 cpsi / 2,5 mil modifiziert wird.

Im Vergleich zu der oben genannten Auslegung des Verbrennungsmotors bzw. des Fahrzeugs mit einem Leergewicht von 1480 kg müsste gemäß dem Stand der Technik zur Erfüllung derselben Schadstoffeinstufung das Katalysatorvolumen auf 1,89 l ansteigen, um ein spezifisches Katalysatorvolumen von SKVOL $\geq$ 0,8 zu erreichen. Damit wären beträchtliche Mehrkosten für die Träger sowie ein erhöhter Aufwand an Edelmetall verbunden. Bei einem vergrößerten Katalysatorvolumen wären ferner Probleme beim Einbau zu lösen und ein höheres Gewicht sowie unter Umständen eine Neukonstruktion von weiteren Teilen der Abgasanlage des Kraftfahrzeugs zu bewältigen.

Bei Einsatz eines Abgasreinigungssystems, dass zumindest einen NOx-Speicherkatalysator und einen vorgeschalteten Dreiwege-Katalysator als Vorkatalysator aufweist, kann der Edelmetallgehalt auf $\leq$ 100 g/ft$^3$, bevorzugt < 80 g/ft$^3$, besonders bevorzugt auf $\leq$ 60 g/ft$^3$ abgesenkt werden. Mit thermisch ungeschädigten Katalysatoren und einer gespeicherten Schwefelmasse < 0,2 g/l Katalysatorvolumen und einen zeitlich gefeuerten Magerbetriebsanteil ohne Schubabschaltungsphasen mit einem Lambda > 1,15 von zumindest 250 Sekunden, insbesondere mindestens 350 Sekunden, kann eine HC-Emission von < 0,07 g/km und eine NOx-Emission von < 0,05 g/km erreicht werden.

Bei einer Zelldichte von 900 cpsi kann in einem Sättigungstest bei 350 Grad NOx-Speicherkatalysatortemperatur und einer NOx-Konzentration von 800 ppm stromauf des NOx-Speicherkatalysators bis zum Absinken der NOx-Konversionsrate auf 50 % eine etwa 20 % höhere NOx-Speicherfähigkeit erreicht werden als bei einer Zelldichte mit 600 cpsi und gleichem Volumen. Dies entspricht in etwa der aufgrund des erhöhten Fahrzeuggewichts vergrößerten NOx-Rohemission. Somit können ohne eine Änderung des Katalysatorvolumens oder der Außenkonturen des Katalysators bei einer erfindungsgemäßen Auslegung des Kraftfahrzeugs die gesetzlichen Vorschriften erfüllt werden.

## Patentansprüche

1.  Verfahren zur Auslegung eines Kraftfahrzeugs mit einem magerlauffähigen Verbrennungsmotor und einer zugeordneten Abgasreinigungsvorrichtung mit einem oder mehreren NOx-Speicherkatalysatoren, **dadurch gekennzeichnet, dass** die Gesamtheit aller NOx-Speicherkatalysatoren ein spezifisches Katalysatorvolumen SKVOL aufweist, welches die Bedingung SKVOL < 1 - 1,25 (SVH-1) genügt, wobei SKVOL = $KATVOL / _{VH \cdot MLEER}$ und SVH = $^{VH} / _{MLEER}$ ist mit KATVOL = NOx-Speicherkatalysatorvolumen in Litern, VH = Motorhubraum in Litern und MLEER = Fahrzeugleergewicht in Tonnen bei der Fahrzeug-Typzulassung und SVH den spezifischen Motorhubraum bezeichnet und dass das Kraftfahrzeug im Neuen Europäischen Fahrzyklus NEFZ für mindestens 250 Sekunden bei einem Abgaslambda > 1,1 betrieben wird und das Kraftfahrzeug die Emissionsstufen EU 3 mit NOx [g/km] < 0,15 oder EU 4 NOx [g/km] < 0,08 erfüllt.

2.  Verfahren nach Anspruch 1, **dadurch gekennzeichnet, dass** der spezifische Motorhubraum SVH einen Wert < 1,2 aufweist.

3.  Verfahren nach zumindest einem der vorhergehenden Ansprüche, **dadurch gekennzeichnet, dass** der Magerbetriebsanteil im Neuen Europäischen Fahrzyklus NEFZ größer als 350 Sekunden ist.

4.  Verfahren nach zumindest einem der vorhergehenden Ansprüche, **dadurch gekennzeichnet, dass** das spezifische Katalysatorvolumen SKVOL < 0,75, vorzugsweise < 0,7, idealerweise < 0,6 beträgt.

5.  Verfahren nach zumindest einem der vorhergehenden Ansprüche, **dadurch gekennzeichnet, dass** das spezifische Katalysatorvolumen SKVOL > 0,2, vorzugsweise > 0,3, idealerweise > 0,4 ist.

6.  Verfahren nach zumindest einem der vorhergehenden Ansprüche, **dadurch gekennzeichnet, dass** der NOx Katalysator Zellen mit einer Zelldichte von 800 cpsi oder mehr, insbesondere 900 cpsi aufweist.

7.  Verfahren nach zumindest einem der vorhergehenden Ansprüche, **dadurch gekennzeichnet, dass** die Zellen keramische Zellwände mit einer Wandstärke von höchstens 3,5 mil, vorzugsweise 3,0 mil, besonders bevorzugt 2,5 mil, aufweisen.

8.  Verfahren nach zumindest einem der vorhergehenden Ansprüche, **dadurch gekennzeichnet, dass** ausgehend von einem vorgegebenen Wert SKVOL = 0,8 bei einer Reduzierung dieses Werts eine Erhöhung des Werts der geometrischen Oberfläche GSA des oder der NOx-Speicherkatalysatoren gemäß folgender Vorschrift gewählt wird:

| SKVOL-Änderung | GSA-Änderung |
|---|---|
| -5% | +1,25% / +1,67% / +2,5% |
| -10% | +2,5% / +3,33% / +5% |
| -15% | +3,75% / +5% / +7,5% |

9.  Verfahren nach zumindest einem der vorhergehenden Ansprüche, **dadurch gekennzeichnet, dass** der NOx-Katalysator wabenartige Zellen aufweist.

10.  Verfahren nach zumindest einem der vorhergehenden Ansprüche, **dadurch gekennzeichnet, dass** der NOx-Katalysator keramische oder metallische Träger mit einem Washcoat aufweist.

11.  Verfahren nach zumindest einem der vorhergehenden Ansprüche, **dadurch gekennzeichnet, dass** der Washcoat eine Edelmetallbeschichtung und NOx-Speichermaterialien aus der Gruppe der schweren Alkalimetalle, der schweren Erdalkalimetalle oder der leichten seltenen Erden trägt.

12. Verfahren nach zumindest einem der vorhergehenden Ansprüche, **dadurch gekennzeichnet, dass** der Verbrennungsmotor ein vorzugsweise magerlauffähiger direkteinspritzender Otto-Motor ist.

13. Verfahren nach zumindest einem der vorhergehenden Ansprüche, **dadurch gekennzeichnet, dass** der Verbrennungsmotor ein direkt einspritzender selbstzündender Motor ist.

14. Verfahren nach zumindest einem der vorhergehenden Ansprüche, **dadurch gekennzeichnet, dass** stromauf des NOx-Katalysators zumindest ein Vorkatalysator, vorzugsweise ein Drei-Wege-Katalysator, angeordnet ist.

**Claims**

1. Method for designing a motor vehicle having an internal combustion engine which is capable of running in lean-burn mode and an associated exhaust-gas purification apparatus with one or more NOx storage catalytic converters, **characterized in that** the combination of all the NOx storage catalytic converters has a specific catalytic converter volume SKVOL which satisfies the condition SKVOL < 1 - 1.25 (SVH-1), where SKVOL = $^{KATVOL}/_{VH \cdot MLEER}$ and SVH = $^{VH}/_{MLEER}$, with KATVOL = NOx storage catalytic converter volume in litres, VH = engine capacity in litres and MLEER = vehicle empty weight in tons for the vehicle model approval and SVH denotes the specific engine capacity, and **in that** in the New European Driving Cycle NEDC, the motor vehicle is operated at an exhaust gas lambda > 1.1 for at least 250 seconds and the motor vehicle satisfies emission classification EU 3 with NOx [g/km] < 0.15 or EU 4 NOx [g/km] < 0.08.

2. Method according to Claim 1, **characterized in that** the specific engine capacity SVH has a value of < 1.2.

3. Method according to at least one of the preceding claims, **characterized in that** the lean-burn mode component in the New European Driving Cycle NEDC is greater than 350 seconds.

4. Method according to at least one of the preceding claims, **characterized in that** the specific catalytic converter volume SKVOL is < 0.75, preferably < 0.7, ideally < 0.6.

5. Method according to at least one of the preceding claims, **characterized in that** the specific catalytic converter volume SKVOL is > 0.2, preferably > 0.3, ideally > 0.4.

6. Method according to at least one of the preceding claims, **characterized in that** the NOx catalytic converter has cells with a cell density of 800 cpsi or more, in particular 900 cpsi.

7. Method according to at least one of the preceding claims, **characterized in that** the cells have ceramic cell walls with a wall thickness of at most 3.5 mil, preferably 3.0 mil, particularly preferably 2.5 mil.

8. Method according to at least one of the preceding claims, **characterized in that** starting from a predetermined value SKVOL = 0.8, as this value is reduced, the value of the geometric surface area GSA of the NOx storage catalytic converter(s) is selected to increase in accordance with the following protocol:

| SKVOL change | GSA change |
|---|---|
| -5% | +1.25%/+1.67%/+2.5% |
| -10% | +2.5%/+3.33%/+5% |
| -15% | +3.75%/+5%/+7.5% |

9. Method according to at least one of the preceding claims, **characterized in that** the NOx catalytic converter has honeycomb-like cells.

10. Method according to at least one of the preceding claims, **characterized in that** the NOx catalytic converter has ceramic or metallic supports with a washcoat.

11. Method according to at least one of the preceding claims, **characterized in that** the washcoat supports a precious metal coating and NOx storage materials selected from the group consisting of the heavy alkali metals, the heavy alkaline-earth metals or the light rare earths.

12. Method according to at least one of the preceding claims, **characterized in that** the internal combustion engine is a direct injection spark-ignition engine that is preferably capable of running in lean-burn mode.

13. Method according to at least one of the preceding claims, **characterized in that** the internal combustion engine is a direct injection compression-ignition engine.

14. Method according to at least one of the preceding claims, **characterized in that** at least one primary catalytic converter, preferably a three-way catalytic converter, is arranged upstream of the NOx catalytic converter.

**Revendications**

1. Procédé pour concevoir un véhicule automobile muni d'un moteur à combustion interne pouvant fonctionner avec un mélange maigre et un dispositif associé de purification des gaz d'échappement comprenant un ou plusieurs catalyseurs à accumulateur de NOx, **caractérisé en ce que** l'ensemble de tous les catalyseurs à accumulateur de NOx présente un volume de catalyseur spécifique SKVOL qui répond à la condition SKVOL < 1 - 1,25(SVH - 1), SKVOL étant égal à KATVOL/VH.MLEER et SVH étant égal à VH/MLEER, KATVOL désignant le volume en litres des catalyseurs à accumulateur de NOx, VH la cylindrée du moteur en litres et MLEER le poids à vide du véhicule en tonnes lors de l'homologation du véhicule selon modèle-type et SVH désignant la cylindrée spécifique du moteur et **en ce que** le véhicule automobile fonctionne dans le nouveau cycle d'essai européen NEFZ pendant au moins 250 secondes avec un lambda des gaz d'échappement > 1,1 et le véhicule automobile satisfait au niveau d'émission EU 3 avec NOx [g/km] < 0,15 ou EU 4 avec NOx [g/km] < 0,08.

2. Procédé selon la revendication 1, **caractérisé en ce que** la cylindrée spécifique du moteur SVH présente une valeur < 1,2.

3. Procédé selon au moins l'une des revendications précédentes, **caractérisé en ce que** la proportion de fonctionnement avec un mélange maigre dans le nouveau cycle d'essai européen NEFZ est supérieur à 350 secondes.

4. Procédé selon au moins l'une des revendications précédentes, **caractérisé en ce que** le volume spécifique du catalyseur SKVOL est inférieur à 0,75, de préférence inférieur à 0,7, idéalement inférieur à 0,6.

5. Procédé selon au moins l'une des revendications précédentes, **caractérisé en ce que** le volume spécifique du catalyseur SKVOL est supérieur à 0,2, de préférence supérieur à 0,3, idéalement supérieur à 0,4.

6. Procédé selon au moins l'une des revendications précédentes, **caractérisé en ce que** le catalyseur à NOx présente des cellules ayant une densité cellulaire de 800 cpsi ou plus, notamment de 900 cpsi.

7. Procédé selon au moins l'une des revendications précédentes, **caractérisé en ce que** les cellules présentent des parois de cellule en céramique ayant une épaisseur de paroi maximale de 3,5 mil, de préférence de 3,0 mil, particulièrement de préférence de 2,5 mil.

8. Procédé selon au moins l'une des revendications précédentes, **caractérisé en ce qu'**en partant d'une valeur prédéfinie de SKVOL = 0,8, lors d'une réduction de cette valeur, une augmentation de la valeur de la surface géométrique GSA du ou des catalyseurs à accumulateur de NOx est choisie conformément à la directive suivante :

| Modification de SKVOL | Modification de GSA |
|---|---|
| -5 % | +1, 25 % / +1,67 % / +2,5 % |
| -10 % | +2,5 % / +3,33 % / +5 % |
| -15 % | +3,75 % / +5 % / +7,5 % |

9. Procédé selon au moins l'une des revendications précédentes, **caractérisé en ce que** le catalyseur à NOx présente des cellules en nid d'abeilles.

10. Procédé selon au moins l'une des revendications précédentes, **caractérisé en ce que** le catalyseur à NOx présente un support en céramique ou métallique avec un revêtement de décantation.

11. Procédé selon au moins l'une des revendications précédentes, **caractérisé en ce que** le revêtement de décantation est un revêtement en métal noble et comporte des matériaux accumulateurs de NOx faisant partie du groupe des métaux alcalins lourds, des métaux alcalinoterreux lourds ou des terres rares légères.

12. Procédé selon au moins l'une des revendications précédentes, **caractérisé en ce que** le moteur à combustion interne est de préférence un moteur à allumage commandé à injection directe pouvant fonctionner avec un mélange maigre.

13. Procédé selon au moins l'une des revendications précédentes, **caractérisé en ce que** le moteur à combustion interne est un moteur à auto-allumage à injection directe.

14. Procédé selon au moins l'une des revendications précédentes, **caractérisé en ce qu'**en amont du catalyseur de NOx est disposé au moins un pré-catalyseur, de préférence un catalyseur à trois voies.

FIG. 1

FIG. 2